(19) Europäisches Patentamt
European Patent Office
Office européen des brevets

(11) Publication number: **0 071 119**
**A2**

(12) # EUROPEAN PATENT APPLICATION

(21) Application number: 82106434.2

(22) Date of filing: 16.07.82

(51) Int. Cl.³: H 01 M 4/32
H 01 M 4/66, H 01 M 4/80

(30) Priority: 24.07.81 US 286564

(43) Date of publication of application:
09.02.83 Bulletin 83/6

(84) Designated Contracting States:
AT BE CH DE FR GB IT LI LU NL SE

(71) Applicant: DIAMOND SHAMROCK CORPORATION
717 North Harwood Street
Dallas Texas 75201(US)

(72) Inventor: Sacco, Anthony R.
Apr. 219 564 Water Street Chardon
Ohio 44024(US)

(74) Representative: Weickmann, Heinrich, Dipl.-Ing. et al,
Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22
D-8000 München 86(DE)

(54) **Nickel reticulate electrode for nickel oxide electrodes.**

(57) This disclosure is directed to the preparation of nickel-plated organic polymer foam reticulate electrodes having open, interconnected cells and upon which nickel is deposited first electrolessly then electrolytically. The nickel-plated reticulate is subsequently impregnated with precursor salts yielding active nickel oxides and then compressed to obtain a compressed, nickel plated, reticulated polymeric foam reservoir containing active nickel oxides (also referred to as nickel oxide-hydroxide, viz., $Ni(OH)_2$.

EP 0 071 119 A2

# NICKEL RETICULATE ELECTRODE FOR NICKEL OXIDE ELECTRODES

## BACKGROUND OF THE INVENTION

Various procedures have been employed to prepare electrodes which are particularly useful in the manufacture of nickel batteries. For example, nickel-cadmium batteries can be prepared wherein the negative electrode is obtained by depositing sponge cadmium within the pores of a sponge nickel deposit or substrate and/or the positive electrode is obtained by anodizing the nickel sponge deposit or otherwise impregnating it with electrochemically active positive material such as nickel oxides.

Present commercial nickel batteries are made by sintering nickel powder to form a porous sheet around a woven wire grid of nickel or nickel plated steel, which can then serve as a reservoir for the impregnation of the nickel hydroxide or nickel oxides.

U.S. Patent 3,790,454 to Henderson et al describes a procedure for forming sponge nickel by electrodeposition from a conventional nickel plating bath to which finely divided, low density nickel powder has been added. This sponge nickel can then be used as a substrate for impregnation by nickel oxides and employed in nickel cadmium batteries.

U.S. Patent 4,160,047 to Saridakis is directed to a process for producing a positive nickel electrode for alkaline storage batteries formed to contain aluminum hydroxide. A porous supporting grid of conducting material is immersed in an impregnating solution containing a nickel salt dissolved in a solvent and at least one aluminum salt in solution. The grid is subsequently immersed in an alkaline medium where the hydroxides are precipitated.

U.S. Patent 4,202,789, also to Saridakis, is directed to a positive cobalt electrode for alkaline storage batteries formed to contain aluminum hydroxide and a process for making it. A porous supporting grid of conducting material is immersed in an impregnating solution containing a cobalt salt

dissolved in a solvent and at least one aluminum salt in solution. The grid is subsequently immersed in an alkaline medium where the hydroxides are precipitated.

At page 3, item 93:223127t of Issue 25, 1980, of CA Selects - Batteries & Fuel Cells, there is mention of nickel electrodes for alkaline batteries made by filling an electrode active ingredient paste into the pores of a Ni-Co alloy foam electrode base. A high-capacity electrode is stated to result. Such electrode is prepared by providing a polyurethane foam with a conductive coating, electroplating it with nickel, and heating it in hydrogen. A paste consisting of nickel hydroxide, nickel powder and CM-cellulose was applied on that base.

Representative of the plastic-bonded prior art are U.S. Patent 4,177,157 to Adams and the patents referred to therein. Such patents attempt to reduce the cost of nickel electrodes by eliminating the use of nickel plaque and using polymer binder to bind the nickel hydroxide.

U.S. Patent 3,694,325 to Katz et al is directed to a process for preparing an electroform by first electrolessly then electrolytically depositing nickel onto a reticulate foam substrate, e.g., flexible ester-type polyurethane, and then oxidizing the carbon contained therein, viz., pyrolyzing off the substrate to obtain a three-dimensionally reticulated nickel metal "electroform." Once the polyurethane substrate has been heated at a sufficient temperature to decompose it, the electroform can be subjected to a second treatment at a higher temperature to anneal the nickel. While column 2, lines 1-2, of Katz et al state that "the substrate may or may not be removed after plating"; all of the remaining disclosure and both claims are limited to heating the nickel-plated substrate to a sufficient temperature and oxidizing environment for decomposition of the polyurethane substrate. At column 3, lines 5-9, Katz et al state that "while it is necessary only to heat to about 600°F for decomposition of polyurethane, it is preferred to exceed this to insure complete oxidation of the carbon." Also, Katz et al fail to give any data or observations concerning any reticulated nickel-plated electroforms other than those wherein the polyurethane substrate is thermally decomposed, viz., pyrolyzed off.

An article by A. Tentorio et al entitled "Characterization of Reticulate, Three-Dimensional Electrodes" appearing in the JOURNAL OF APPLIED ELECTROCHEMISTRY NO. 8 (1978), pages 195-205, is directed to the preparation of reticulate, three-dimensional electrodes formed by first electrolessly then electrolytically depositing copper onto polyurethane foam.

Tentorio et al at page 205 of said article suggest that such copper plated reticulate polyurethane foam electrodes could be used in the pretreatment phase for waste water treatment combined with more refined purification treatments, for example, using ion-exchange resins. Their use is also suggested for electrosynthesis, particularly for organic fine chemicals.

In any event, nickel batteries, viz., those containing nickel oxide electrodes, are becoming very popular. They are found in portable tools and appliances, e.g., nickel/cadmium, in aerospace applications, nickel/hydrogen, nickel/cadmium, and even in experimental electric-powered vehicles, nickel/hydrogen, nickel/iron, nickel/zinc, etc. Essentially such electrodes work by utilizing the following reaction:

$$Ni(OH)_2 + OH^- \underset{\text{discharge}}{\overset{\text{charge}}{\rightleftharpoons}} \beta\text{-}NiOOH + H_2O + e^- .$$

The oxides, themselves, are very poor conductors of electricity and mechanically would not make for a sturdy electrode. As a result, the nickel oxides require a holder and a current collector. Basically three approaches have been taken to provide substrates for these electrically active nickel oxides. One is a sintered nickel plaque. Such plaques are essentially fabricated from nickel plated steel screens packed with nickel powder. The material is then sintered. Customarily the process is continuous and a slurry of nickel powder, water and organics is dragged onto a screen and conveyed through drying and sintering ovens. Characteristically such sintered nickel plaque is from 30 to 120 mils thick, has a porosity of 80 to 85 percent, a BET surface area of about 0.5 square meters per gram and a pore diameter of 11 to 14 microns. Such sintered nickel plaques are then impregnated with nickel oxide. Another approach to this nickel battery support is to fill metal tubes with an oxide/conductor mixture. A third approach is to press the nickel oxide/conductor mixtures into metal screen substrates. This technique tends to offer lower cost whereas the first two types are presently in use in nickel/cadmium batteries.

The present invention has respective advantages over each prior type of nickel battery in that it offers an improved substrate having a lower weight, is capable of more rapid production and at ambient temperatures (versus the much higher temperatures required for sintering of nickel) and is capable of uniform performance.

An article entitled "Improvement of the High-Rate Discharge Behavior of the Nickel Electrode" by Guy Crespy et al published in POWER SOURCES 7 (RESEARCH AND DEVELOPMENT IN NON-MECHANICAL ELECTRICAL POWER SOURCES), proceedings of the 11th international symposium held at Brighton, September, 1978, edited by J. Thompson and published in 1979 by Academic Press is directed to the use of nickel foam metal substrates which are used in nickel oxide battery electrodes. The nickel foam substrate is prepared by impregnating an organic foam, e.g., a polyether foam, with nickel powder and then pyrolyzing off the organic polyether foam by heating it under a very light pressure (approximately 2 grams per centimeter$^{-2}$) in a reducing atmosphere at temperatures up to 450$^{o}$C to quantitatively eliminate the organic material. The nickel powder which is left is then heated at temperatures of about 700$^{o}$ to 1000$^{o}$C to sinter it. Typical sintering conditions involve the use of 1000$^{o}$C for one hour. It will be seen that the Crespy et al nickel foam substrate is similar to the Katz et al U.S. Patent 3,694,325 in that both pyrolyze off the organic foam during the process of preparing their reticulated substrates. Other patents, e.g., U.S. Patent 4,160,047 and U.S. Patent 4,202,789 to N. Saridakis utilize nickel sponge impregnated with various salts to prepare alkaline storage batteries. In U.S. Patent 4,160,047, a combination of a nickel salt, a cobalt salt and an aluminum salt can be used on a nickel sponge substrate preimpregnated with an aluminum salt to prepare a positive nickel electrode for an alkaline storage battery. U.S. Patent 4,202,789 describes preparing a positive cobalt electrode for alkaline storage batteries by immersing nickel sponge in an impregnating solution containing a cobalt salt, at least one aluminum salt and preferably a small amount of a nickel salt. Upon immersion of the thus impregnated nickel sponges in alkaline media, the hydroxides are precipitated.

## DETAILED DESCRIPTION OF THE INVENTION

The nickel-plated organic polymer foam reticulate electrode substrates of this invention are prepared by what essentially involves a three-stage process. First the substrate has deposited thereon an initial electroless plating of nickel. Then the electrolessly nickel-plated organic polymeric foam has a second nickel layer plated thereon by an electrolytic procedure. The nickel-plated foam structure is then impregnated with the nickel oxide compounds to result in the finished battery electrode. According to a preferred

embodiment of this invention, the nickel foam is compressed to from 25 to 50 percent of its original volume (after impregnation with nickel oxide) to thereby increase its volumetric capacity without resulting in loss of efficiency. Also the compression effects a reduction in pore size which increases the utilization of as much active material, viz., the active nickel oxide materials, at the higher potentials. Moreover, this compression tends to decrease the dimension of the layer of $Ni(OH)_2$ within the pores of the nickel-plated organic polymer foam substrate which is advantageous because the nickel oxide is a very poor electronic conductor. The sequence of compression after impregnation permits use of less of the active material and reduces the impregnation time. Another advantage to the sequence of impregnation followed by compression is that when impregnation is being conducted, it is an advantage to have larger pores so as to permit the impregnant to migrate in the foam within the pores aforded by the open cell intercommunicating polymer foam structure. Then compression of the impregnated structure results in smaller pore sizes which is likewise desirable for increasing the utilization of active material.

It will be observed that the process for forming the nickel-plated organic polymer foam reticulate electrode substrates in accordance with this invention involves temperatures from room temperature (ambient temperature) to about 70°C for the deposition procedures utilizing aqueous deposition systems as opposed to the much higher temperatures employed in the pyrolysis techniques of Katz et al U.S. Patent 3,694,325 and the Guy Crespy et al article as well as the even higher annealing temperatures of Katz et al and the sintering temperatures of Crespy et al.

## ORGANIC POLYMER FOAM SUBSTRATE

The present invention envisions the use of a wide variety of open cell, viz., interconnected cell, polymer foams. Suitable organic polymer foam substrate materials include but are not necessarily limited to, polyurethane foam, the open cell polyurethane foams such as Scott Industrial Foam, Q version; Scott Industrial Foam, PVC coated; Scottfelt foam; polyether urethane foams; polyester urethane foams, etc.

The organic polymer foam material can have pre-compression pore sizes ranging from about 0.5 to about 100 mils, viz., 0.0005 to about 0.1 inch. Usually, however, the pre-compression pore size of the interconnecting cell organic polymer foam ranges from about 0.2 to about 20 mils, viz., 0.002 to

about 0.01 inch. Such foam substrates characteristically contain from about 20 to about $45^+$ pores per inch (ppi) prior to compression. In cases where the metallized foam is compressed to 25 percent of its original volume, the post-compression foam average pore size can range from 0.125 to 25 mils versus a comparable range of 0.25 to 50 mils for 50 percent compression.

## ELECTROLESS PLATING

The organic polymer foam, e.g., polyurethane, substrate, Scott Industrial Foam (Q version), has a layer of nickel deposited electrolessly thereon by immersion into the electroless nickel plating bath for time periods ranging from about 2 to 60 minutes of temperatures ranging from about 15°C to about 60°C. Usually, however, the electroless deposition of nickel is applied by immersing the organic polymer foam substrate in the electroless plating bath from 5 to 10 minutes at temperatures from ambient room temperature, viz., about 20°C, to about 50°C.

Prior to immersing the polyurethane foam into the electroless nickel plating bath, it is treated with a sensitizing material, and then a catalyzing material to render it receptive to deposition of the electroless nickel plating. Thus, the polyurethane substrate is immersed at room temperature into a sensitizing solution of an aqueous nature containing stannous chloride and hydrochloric acid in water, it is thoroughly rinsed, it is immersed into a catalyzing solution of an aqueous nature containing palladium chloride and hydrochloric acid in water, it is thoroughly rinsed, then it is ready for the electroless nickel deposition. Characteristically, the polyurethane substrate is immersed into the sensitizing bath and the catalyzing bath for 2 to 10 minutes at ambient temperature. Typically, the sensitizing bath contains from 5 to 15 grams per liter of anhydrous stannous chloride, viz., $SnCl_2$, and from 0.005 to 0.015 gram per liter of hydrochloric acid, viz., HCl. The catalyzing bath contains from 0.2 to 1.0 gram per liter of palladium chloride, viz., $PdCl_2$, and from 0.005 to 0.015 gram per liter of hydrochloric acid, viz., HCl.

Then as noted the prepared organic polymer foam substrate is immersed into the electroless bath customarily maintained at ambient to slightly elevated temperatures, e.g., from 20°C to about 60°C. The electroless plating bath is composed of two components, one containing nickel chloride, ammonium chloride, sodium citrate and ammonium hydroxide and the other component characteristically contains sodium hypophosphite and water. The electroless

plating bath is prepared suitably by first adding the nickel chloride, viz., $NiCl_2 \cdot 6H_2O$, the ammonium chloride, the sodium citrate and the ammonium hydroxide to the water and the mixture is throughly agitated to obtain dissolution of the components therein. Then the sodium hypophosphite is added to water and agitated to obtain dissolution. Both baths are added together to obtain the nickel electroless plating bath. Characteristically, the electroless plating bath contains from 40 to 50 grams per liter of the hydrated nickel chloride, 45 to 55 grams per liter of ammonium chloride, from 95 to 105 grams per liter of the sodium citrate, from 250 to 275 grams per liter of ammonium hydroxide, and from about 10 to 20 grams per liter of the sodium hypophosphite.

## ELECTROLYTIC PLATING

The organic polymer foam substrate as indicated above is electrolessly plated using conventional electroless plating baths for nickel plating followed by electrolytic plating using conventional nickel electroplating baths. The constituents of this electrolytic bath are nickel sulfate and boric acid. Anti-pitting agents can be used to control pitting of the deposits, and agitation is recommended during deposition. Consumable nickel anodes were used to maintain the bath compositions. A typical composition and range and operating conditions are as follows:

| | Range (g/l) | Nominal Value (g/l) |
|---|---|---|
| Nickel sulfate ($NiSO_4 \cdot 6H_2O$) | 225-375 | 330 |
| Boric acid ($H_3BO_3$) | 30-40 | 37 |
| Temperature $^{o}C$ | 45-65 | 60 |
| pH | 4.0-6.0 | 4 |
| Current density | 25-100 amp/ft$^2$ | 50 |

## IMPREGNATION WITH ACTIVE NICKEL OXIDES

Upon removal from the electrolytic plating bath, the organic polymer foam has deposited thereon an initial electroless plating upon which there is deposited an electrolytic plating. The nickel-plated foam substrate can characteristically have from about 0.06 to about 0.15 gram total nickel deposited

per cc of foam by both procedures. The thus nickel-plated organic polymer foam substrate is then impregnated with nickel salts, typically nickel nitrate from an aqueous or molten salt solution.

The active material nickel hydroxide ($Ni(OH_2)$) is produced by chemical, electrochemical or thermal processes. Detailed descriptions of these processes as employed for impregnating sintered Ni plaque are well known and described in numerous works, e.g., Alkaline Storage Batteries, Suno Falk & Alvin Salkind, J. Wiley & Sons Inc., 1969; and Air Force Systems Command Technical Report AFAPL-TR-75-34, Parts I & II and Technical Report AFPL-TR-75-64.

After impregnation, the structure is compressed to from about 20 to about 60 percent of its plated volume. Preferably the compression of the nickel-plated organic polymer foam substrate is performed to result in a volume ranging from about 25 to about 50 percent of the plated volume prior to compression.

The invention will be illustrated in further detail in the examples which follow. In these examples, all parts, percents and ratios are by weight unless otherwise indicated.

## EXAMPLE 1

(Plating and Impregnating of Electrode Substrate)

A 2" x 2" piece of (Foam A) polyether urethane foam 125 mils in thickness with pores 5 to 10 mils in diameter and a density of 4.6 percent was electrolessly and electrolytically plated with Ni. The electroless plating procedure was as follows. This polyurethane foam was immersed at room temperature for 5 minutes in an aqueous solution containing 10 grams per liter (g.p.l.) $SnCl_2$ and 10 milliliters per liter (ml/l) of hydrochloric acid. The foam substrate was then rinsed in distilled water followed by a 5-minute immersion at room temperature in an aqueous solution containing 5 g.p.l. $PdCl_2$ containing 10 ml/l HCl. The foam substrate was again rinsed in distilled water. The rinsed foam was then immersed for 10 minutes in an aqueous solution having a total volume of 1023.7 milliliters and containing 45 g.p.l. of $NiCl_2 \cdot 6H_2O$, 50 g.p.l. $NH_4Cl$, 100 g.p.l. Na citrate, 5 g.p.l. $NH_4OH$ and 23.7 ml of 450 g.p.l. sodium hypophosphite (the remainder being distilled water). This electroless plating bath was heated to 50°C. The nickel electrolessly plated foam was then rinsed in distilled water and electrolytically plated with nickel simultaneously from both sides by immersing in a Watts bath between two nickel anodes. The Watts bath composition is tabulated below:

| Component | Range oz/gal (g/l) | Nominal Values oz/gal (g/l) |
|---|---|---|
| Nickel sulfate ($NiSO_4 \cdot 6H_2O$) | 30-50 (225-375) | 44 (330) |
| Nickel chloride ($NiCl_2 \cdot 6H_2O$) | 4-8 (30-60) | 6 (45) |
| Boric acid ($H_3BO_3$) | 4-5.3 (30-40) | 5 (37) |
| Temperature $^oF$ ($^oC$) | 110-150 (45-65) | 140 (60) |
| pH | 1.5-4.5 | 3-4 |
| Current density (amperes/$ft^2$) | 25-100 | 50 |

The plating current was 20 milliamperes/$cm^2$ (ma/$cm^2$) and the foam was kept in the plating bath for 7 hours which resulted in an electrolytic deposition of 7.65 grams of nickel. The plated foam was 170 mils thick after plating.

The Ni plated foam was then impregnated with $Ni(OH)_2$. This was accomplished by immersing the foam into an aqueous solution containing 250 g.p.l. Ni (using $NiNO_3 \cdot 7H_2O$) and 25 g.p.l. Co (using ($CoNO_3 \cdot 7H_2O$) at 50$^oC$ for 30 minutes. The foam was removed and immediately placed in an aqueous solution containing 25 percent KOH and polarized cathodically on both sides at 80 ma/$cm^2$ to precipitate the $Ni(OH)_2$ in the pores. The impregnation procedure was repeated 3 times. This resulted in a loading of 1.6 ampere hours (AH) or 5.66 gm of $NI(OH)_2$ into the electrode. This Ni(OH) impregnated nickel plated polyurethane foam electrode was subsequently tested in Examples 3 and 4 below.

## EXAMPLE 2

(as in Example 1 but Using Substrate Having Smaller Pores)

A Scott felt polyurethane foam (Foam B) substrate 70 mil thick with 2 to 5 mil pores and having a density of 9.6 percent was electrolessly and electrolytically plated using the same basic procedure as in Example 1. This time the 2" x 2" Foam B was plated at 6.6 ma/$cm^2$ for 21.5 hours (7.2 AH, 7.88 gmNi). The foam was impregnated using the same procedure as in Example 1 except the process was repeated 5 times. A total of 1.6 AH or 5.66 mg of $Ni(OH)_2$ was deposited.

EXAMPLE 3

(Performance Testing)

The Ni oxide impregnated nickel plated foam electrodes of Examples 1 and 2 were fitted with a stainless steel (SS) current collector along one edge. These Ni oxide electrodes were then placed in a beaker between two "DSA " counter electrodes. These "DSA" counter electrodes are dimensionally stable electrodes having a titanium substrate with a ruthenium oxide/titanium dioxide coating and are well known in the art. "DSA" is a registered trademark of Diamond Shamrock Technologies of Geneva, Switzerland. The aqueous electrolyte was 220 g.p.l. KOH with 25 g.p.l. LiOH at 25$^{o}$C.

TABLE 1

| C Rate (Rate of Discharge) | Ampere Hour-Efficiency (percent of Theoretical) Foam A | Foam B |
|---|---|---|
| Capacity (C)/1.6 hours | 45% | - |
| Capacity (C)/2.5 hours | - | 69% |
| Capacity (C)/4 hours | 58% | - |

The Ni oxide electrodes were charged until $O_2$ evolution occurred and discharged until $H_2$ evolution occurred at a constant current density while allowing the voltage to vary. Results are shown in Table 1 above. It will be observed that Foam B (having the smaller pores) showed a higher amp-hr efficiency at least over the 2.5-hour discharge period.

EXAMPLE 4

(Compression Vs. No Compression)

The Ni oxide electrode made from Foam A, as in Example 1, after several discharges, was compressed from 170 mils thick to 70 mils thick by a hydraulic press. This electrode was tested before and after compression in the same manner as in Example 3. The results are shown in Table 2.

TABLE 2

| | Thickness | % Reduction | Amp.-Hr. Eff. | Amp.-Hr. Capacity Volumetric | C Rate |
|---|---|---|---|---|---|
| Compressed | 70 mils | 41% | 57% | 5.7 AH/$in^3$ | C/4 |
| Not Compressed | 170 mils | 0% | 58% | 2.4 AH/$in^3$ | C/4 |

As will be noted from Table 2, the compressed, nickel oxide impregnated, nickel plated, polymer foam electrode showed no decrease in amp.-hr. efficiency versus the comparable uncompressed electrode; but the compressed electrode yielded a volumetric amp.-hr. capacity approximately twice that of the noncompressed counterpart.

WHAT IS CLAIMED IS:

1. A reticulate electrode comprising a compressed, nickel oxide-impregnated, nickel plated open cell, organic polymer foam having pores ranging from about 0.125 to about 50 mils in average diameter.

2. A reticulate electrode as in Claim 1 wherein said foam is polyurethane.

3. A reticulate electrode as in Claim 1 wherein said foam contains from about 20 to about $45^+$ pores per inch.

4. A reticulate electrode as in Claim 1 wherein the volume of said compressed electrode ranges from about 25 to about 50 percent of its volume after impregnation.

5. A process for preparing a reticulate electrode comprising electrolessly depositing nickel upon an organic polymer foam substrate having open interconnecting pores ranging in average diameter from about 0.5 to about 100 mils; electrolytically depositing nickel upon such electroless nickel; impregnating said structure with a nickel salt(s) precursor(s) of active nickel oxide and compressing said nickel-plated, impregnated organic polymer foam structure to obtain a compressed reticulate electrode whose pores range in average size from about 0.125 to about 50 mils.

6. A process as in Claim 1 wherein said foam is polyurethane.